# EUROPÄISCHE PATENTSCHRIFT

(11) **EP 4 520 423 B1**
(45) Veröffentlichungstag und Bekanntmachung des Hinweises auf die Patenterteilung: **22.04.2026**
(21) Anmeldenummer: 24195954.3
(22) Anmeldetag: 22.08.2024
(51) Int. Cl.: B01D 46/00, B01D 46/10, B01D 46/62, B05B 14/43

(54) **FILTERMODUL**
FILTER MODULE
MODULE DE FILTRATION

(30) Priorität: 08.09.2023 DE 102023124274
(43) Veröffentlichungstag der Anmeldung: 12.03.2025
(73) Patentinhaber: Kara, Jürgen, 96465 Neustadt/Coburg (DE)
(72) Erfinder: Kara, Jürgen, 96465 Neustadt/Coburg (DE)
(74) Vertreter: Isarpatent

(56) Entgegenhaltungen:
- WO-A1-2007/028176
- DE-A1- 102011 050 915
- DE-U1- 202015 104 109
- KR-A- 20210 009 725

## Beschreibung

### GEBIET DER ERFINDUNG

Die vorliegende Erfindung betrifft ein Filtermodul zur Abscheidung von Partikeln aus verunreinigter Luft.

### TECHNISCHER HINTERGRUND

Filtermodule werden für unterschiedliche Anwendungen eingesetzt. Beispielsweise können diese im Bereich von Sprühkabinen zur Aufnahme von Farbnebel eingesetzt werden. Die Filtermodule dienen dabei zur Reinigung der von der Sprühkabine abgeführten Luft. Die Farbpartikel, welche nicht an einem zu besprühenden Objekt anhaften, können durch die Filtermodule abgeschieden werden. Derartige Filtermodule können demnach ebenso als Abscheider bzw. Abscheidermodule bezeichnet werden.

Für gewöhnlich besitzen Filtermodule eine Eintrittsseite, die für den Eintritt eines zu reinigenden Luftstroms ausgebildet ist. Auf einer gegenüberliegenden Seite ist bevorzugt eine Austrittsseite angeordnet, die zum Austritt des gereinigten Luftstroms dient.

Beispielsweise können mehrere gleichartige Filtermodule nebeneinander bzw. aufeinander angeordnet werden, sodass eine zusammenhängende Fläche entsteht, die beispielsweise unterhalb oder auch seitlich neben dem zu besprühenden Objekt angeordnet werden kann. Dabei sind alle Eintrittsseiten auf einer Seite der zusammenhängenden Fläche angeordnet. Bevorzugt wird sozusagen hinter den Filtermodulen ein Unterdruck erzeugt, sodass ein Luftstrom durch die Filtermodule entsteht, der von der Eintrittsseite in Richtung der Austrittsseite strömt. Durch den Luftstrom wird die zu reinigende Luft durch die Filtermodule hindurchgeführt und gereinigt, indem die Partikel innerhalb der Filtermodule anhaften bzw. an den Filtermodulen abgeschieden werden.

Aus dem Stand der Technik sind Filtermodule bekannt, die aus einem Papierstoff ausgebildet ist. Innerhalb des Filtermoduls sind zumindest zwei Wände angeordnet, die quer zur Richtung des eintretenden Luftstroms angeordnet sind und Prallwände ausbilden. Die Wände weisen jeweils Öffnungen auf, wobei die Öffnungen der Wände von der Eintrittsseite in Richtung der Austrittsseite kleiner werden und/oder versetzt zueinander angeordnet sein können. Durch die Wände entstehen Kammern innerhalb des Grundkörpers. Der zu reinigende Luftstrom wird mäanderförmig durch die unterschiedlich angeordneten Öffnungen in den hintereinander angeordneten Wänden geführt.

Es ist ebenso möglich, die Wände über eine quer dazu ausgerichtete Stabilisierungswand miteinander zu verbinden. Mehrere derartige Reinigungsstrukturen können hintereinander innerhalb des Hohlkörpers angeordnet werden und so das Filtermodul ausbilden. Durch die Öffnungen in den Wänden sowie in der Stabilisierungswand wird die zu reinigende Luft mäanderförmig abwechselnd durch die Wände und durch die Stabilisierungswände durch das Filtermodul geleitet.

Nachteilig ist bei derartigen Filtermodulen, dass durch die Umleitung des Luftstroms in unterschiedliche Raumrichtungen die Anhaftungen der Partikel innerhalb des Filtermoduls sehr unterschiedlich, d. h. ungleich verteilt, ausfällt. Dies resultiert aus der mäanderförmigen Führung des Luftstroms, wodurch der Luftstrom nach Eintritt auf der Eintrittsseite um annähernd 90° in jede mögliche Raumrichtung umgeleitet wird. Durch diese schlagartige Umleitung des Luftstroms, beispielsweise nach links, rechts, oben oder unten innerhalb des Filtermoduls, erfolgt eine abrupte und sehr starke Abbremsung. In einer ersten Kammer zwischen einer ersten und einer zweiten Wand, die der zu reinigende Luftstrom als erstes erreicht, werden folglich die meisten Partikel abgeschieden. Weiter hinten angeordnete Kammern werden nur noch von wenigen Partikeln erreicht. Die Effizienz und Lebensdauer jedes Filtermoduls wird dadurch verringert, da diese bereits ausgetauscht werden müssen, wenn weiter hinten angeordnete Bereiche innerhalb des Filtermoduls erst sehr geringe Partikelansammlungen aufweisen.

Weiterhin nachteilig ist ein Teil der Durchströmungsfläche von einem luftundurchlässigen Material überdeckt, wobei zwar Partikel an der Fläche der sogenannten Prallwände anhaften können, die Luft jedoch umgelenkt wird.

Aus dem Stand der Technik ist es ebenso bekannt, einzelne Reinigungsstrukturen, die hintereinander innerhalb des Grundkörpers angeordnet sind, einzeln zu entnehmen. Dadurch kann die Reinigungsstruktur, welche am nächsten an der Eintrittsseite angeordnet ist, ausgetauscht werden.

Während des Betriebs in einer Sprühkabine, wobei meist mehrere baugleiche Filtermodule nebeneinander bzw. aufeinander zu einer zusammenhängenden Fläche angeordnet sind, ist der Austausch einzelner Reinigungsstrukturen aus jedem einzelnen Filtermodul jedoch nur unter großem Zeitaufwand möglich. Insbesondere muss zum Austausch einer Reinigungsstruktur aus jedem einzelnen Filtermodul jeder einzelne Hohlkörper geöffnet werden. Dies ist bei nebeneinander sowie aufeinander angeordneten Filtermodulen nicht möglich. Demnach müsste die zusammenhängende Fläche aus Filtermodulen zunächst auseinandergebaut werden, sodass jedes einzelne Filtermodul zugänglich ist. Daraus resultiert ein enormer Zeitaufwand. In der Praxis ist der Austausch einzelner Reinigungselemente daher kaum möglich. Folglich werden erfahrungsgemäß die Filtermodule bereits dann komplett ausgetauscht, wenn lediglich das erste Reinigungselement derart verschmutzt ist, dass der Luftstrom dieses eine Reinigungselement nicht mehr durchströmen kann.

Zum Stand der Technik kann weiterhin auf die DE 20 2015 104109 U1 verwiesen werden, die ein Filtermodul für einen Farbpartikelabscheider mit geschlitzten Abscheiderbahnen, die hintereinander angeordnet werden, zeigt. Jedes der Bahnen wird mittels eines Abstandshalter eingespannt, sodass die Schlitze aufgezogen werden und Öffnungen entstehen.

Die DE 10 2011 050915 A1 zeigt einen Filter mit einem Filtermaterial ohne Öffnungen.

In der WO 2007/028176 A1 ist ein Filtermodul mit Filtereinsätzen bekannt, wobei jeder Filtereinsatz aus mehreren Filterbahnen besteht und die Filterbahnen hintereinanderliegender Filtereinsätze versetzt zueinander angeordnet sind. Die Filterbahnen werden an einem Ende über einen Filterträger gehaltern und am anderen Ende in das Gehäuse eingesteckt, wobei Einschuböffnungen vorgesehen sind.

In der KR 2021 0009725 A wird weiterhin ein Filtermodul gezeigt, wobei mehrere Filtereinsätze hintereinander in einem Rohr angeordnet sind. In jedem Filtereinsatz ist eine Öffnung vorgesehen, wobei die Öffnungen versetzt zueinander angeordnet sind.

### ZUSAMMENFASSUNG DER ERFINDUNG

Vor diesem Hintergrund liegt der vorliegenden Erfindung die Aufgabe zugrunde, ein verbessertes Filtermodul anzugeben, das eine verbesserte Standzeit aufweist. Insbesondere ist es Aufgabe der Erfindung, ein Filtermodul mit einem bessern Abscheideverhalten bereitzustellen, wobei ein geringerer Energiebedarf zum Betrieb benötigt wird.

Erfindungsgemäß wird diese Aufgabe durch ein Filtermodul mit den Merkmalen des Patentanspruchs 1 gelöst.

Demgemäß ist vorgesehen:
Ein Filtermodul zur Abscheidung von Partikeln aus verunreinigter Luft, insbesondere zur Abscheidung von Farbpartikeln aus einem Luftstrom, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend am Aufnahmeelement angeordnet sind, zumindest einem Filtereinsatz, der in dem Aufnahmeelement aufgenommen ist, wobei der Filtereinsatz zumindest eine Querwand aufweist, und die Querwand aus einem zumindest teilweise luftdurchlässigen Filterelement ausgebildet ist, wobei in dem Filterelement oder neben dem Filterelement ein offener Teilbereich ausgebildet ist, sodass der Luftstrom von der Eintrittsseite in Richtung der Austrittsseite zum einen durch das Filterelement und zum andern durch den offenen Teilbereich strömen kann, wobei die zumindest eine Querwand als Sandwichpaneel ausgebildet ist und ein Rahmenelement aufweist, wobei das Filterelement an dem Rahmenelement befestigt ist.

Die der vorliegenden Erfindung zugrundeliegende Erkenntnis besteht darin, dass durch den Verzicht auf Prallwände ein langlebiges sowie effektives Filtermodul ausgebildet werden kann.

Die der vorliegenden Erfindung zugrundeliegende Idee besteht darin, die Luftströmung nicht abrupt abzubremsen oder umzulenken, sondern stattdessen ohne Umlenkung, und/oder insbesondere laminar, zwischen der Eintrittsseite und der Austrittsseite auszubilden, um eine ausgeglichene Anhaftung der Partikel an allen Querwänden innerhalb des Aufnahmeelements zu ermöglichen. Dabei wird die Idee einer offenen Luftführung ohne Prallwände umgesetzt, wobei der Luftstrom zum einen durch ein Filterelement und zum anderen durch einen offenen Teilbereich strömt. Insbesondere kann eine Querwand ausgebildet werden, die im Wesentlichen komplett luftdurchlässig ausgebildet ist, nämlich aus einem zumindest teilweise luftdurchlässigen Material, dem Filterelement, und einer Öffnung, dem offenen Teilbereich.

Ferner ist es auf diese Weise vorteilhaft möglich, einen offenen Teilbereich mit einer beliebigen Geometrie auszubilden, um den Filter an unterschiedliche Filtergrade anzupassen. Ebenso kann durch den offenen Teilbereich die Luftströmung innerhalb des Aufnahmeelements beeinflusst werden. Das Filterelement kann insbesondere allein durch seine Form die Form des offenen Teils beeinflussen. Dabei kann das Filterelement beliebig zugeschnitten werden, um unterschiedliche Geometrien zu erzielen. Der offene Teilbereich kann daher als Aussparung in dem Filterelement oder neben, insbesondere benachbart zu, dem Filterelement ausgeformt sein. Benachbart bedeutet insbesondere, dass der offene Teilbereich in einer Ebene der Querwand ausgebildet wird, indem die Querwand entsprechend zugeschnitten wird, sodass nicht eine komplette Querschnittsebene in dem Aufnahmeelement mit dem Filterelement überspannt wird. Der offene Teilbereich kann daher einfach und kostengünstig hergestellt werden.

Ein Verhältnis der Fläche des offenen Teilbereichs im Verhältnis zu der Fläche der gesamten Querwand kann 1:2 bis 1:20, insbesondere 1:2 bis 1:10, bevorzugt 1:5 bis 1:12 betragen. Beispielsweise kann der offene Teilbereich die Hälfte der Querwand ausbilden, oder auch 1/4 oder 1/5 der Fläche der Querwand.

Als Querwand ist ein Element zu verstehen, das quer zur Luftströmung innerhalb des Aufnahmeelements angeordnet ist. Insbesondere ist die Querwand komplett luftdurchlässig ausgebildet, wobei unterschiedliche Bereiche mit unterschiedlichen Luftdurchlässigkeiten beliebig angepasst werden können. Bevorzugt besteht die Querwand daher aus einem Filtermedium, wobei keine Prallwand umgesetzt wird.

Der Luftstrom kann an jedem Ort der Querwand diese durchströmen. Die Unterschiede in den Strömungsgeschwindigkeiten der Strömungen, die durch den offenen Teilbereich und durch das Filterelement verlaufen, sind gering, sodass eine insbesondere laminare Strömung ausgebildet werden kann. Dadurch, dass in keinem Teilbereich der Luftstrom durch eine Querwand abgebremst wird, kann das Abscheidverhalten im Vergleich zu Ausführungen mit Querwänden und mehreren Durchgangsöffnungen aus dem Stand der Technik enorm gesteigert werden. Insbesondere kann das Abscheidverhalten um mehr als 100 % im Vergleich zu bekannten Filtermodulen verbessert werden. Dies kann insbesondere dadurch umgesetzt werden, dass durch die offene Luftführung von der Eingangsseite bis zur Ausgangsseite die Luftströmung nicht durch Prallwände umgelenkt wird. Die Luft strömt durch das luftdurchlässige Filterelement, wobei sich Partikel an dem Filterelement abscheiden können. Dies kann solange stattfinden, bis das Filterelement von Partikeln gesättigt ist, und keine Luft mehr hindurchströmen kann. Durch den offenen Teilbereich erfolgt jedoch kein "Verstopfen" der Querwand, sodass ein kontinuierliches Hindurchströmen der Luft durch den offenen Teilbereich gewährleistet werden kann.

Bei mehreren derartigen hintereinander angeordneten Querwänden kann insbesondere eine gleichmäßigere Abscheidung stattfinden, wobei auch eine sehr weit in Richtung Austrittsseite angeordnete Querwand zum Abscheiden der Partikel in hohem Maße beitragen kann. Dabei erfolgt insbesondere eine Sättigung der Querwände mit Partikeln der Reihe nach, wobei die Luft durch den offenen Teilbereich in jeder Querwand auch die letzte Querwand erreichen kann, sodass auch die am weitesten in Richtung Austrittsseite angeordnete Querwand mit Partikeln gesättigt werden kann. Daher kann ebenso die Standzeit um mindestens 100 % im Vergleich zu Filtermodulen mit Prallwänden aus dem Stand der Technik erhöht werden.

Die offene Luftführung ermöglicht es, den Luftstrom bis zur Austrittsseite, insbesondere über einen langen Zeitraum bei Betrieb der Filtermodule, ohne Umlenkung durchzuleiten. Somit ist auch weniger Energie notwendig, um den Luftstrom zu erzeugen. Insbesondere kann daher im Vergleich zu Filtermodulen aus dem Stand der Technik, die insbesondere mit Prallwänden ausgeführt sind, mindesten 30 % Energie eingespart werden. Beispielsweise kann auch Energie von 40 % bis 50 % im Vergleich zu Ausführungen aus dem Stand der Technik eingespart werden.

Das Filterelement kann aus einem Filament ausgebildet sein oder ein Filament enthalten. Insbesondere kann das Filterelement eine Naturfaser, beispielsweise aus einem Hanfmaterial, Jutematerial und/oder Bastmaterial, enthalten. Des Weiteren kann das Filament einen Kunststoff enthalten. Das Filament zeichnet sich insbesondere durch eine Endlosfaser aus, die als dreidimensionale Struktur verbunden werden kann. Dabei kann ein 3D-Druckverfahren eingesetzt werden. Andere luftdurchlässige Materialien sind ebenso denkbar.

Das Filterelement kann eine gewebte oder feinstrukturierte Struktur aufweisen, die insbesondere dreidimensional ausgebildet ist. Die Dicke des Filterelements kann beispielsweise 10 mm bis 200 mm oder 50 mm bis 200 mm betragen, insbesondere 10 mm bis 50 mm oder 10 mm bis 20 mm. Dadurch kann ein dreidimensionales Filterelement ausgebildet werden. Die gewebte Struktur bzw. das Filament kann miteinander verbundene Faserabschnitte aufweisen, wobei zwischen den Fasern luftdurchlässige Zwischenräume angeordnet sind. Das Filterelement kann dabei unterschiedlich fein oder grobmaschig ausgebildet sein.

Darüber hinaus besitzt ein derartiges Filtermodul einen einzigen Filtereinsatz, der über die komplette Lebensdauer des Filtermoduls nicht ausgetauscht werden muss, wobei alle Elemente des Filtereinsatzes bis zur Unbrauchbarkeit, d. h. bis zur Verstopfung durch abgeschiedene Partikel, verwendet werden können.

Die zumindest eine Querwand ist als Sandwichpaneel ausgebildet und weist ein Rahmenelement auf, wobei das Filterelement an dem Rahmenelement befestigt ist. So kann beispielsweise an einer Oberfläche des Rahmenelements das Filterelement fixiert werden. Insbesondere weist die Querwand ein umlaufendes Rahmenelement auf, an welchem das Filterelement gehalten werden kann. Der umlaufende Rahmen dient insbesondere zur Stabilisierung des Filterelements und hat kaum Auswirkungen auf den Wirkungsgrad des Filtermodus, da der Rahmen kaum oder gar nicht zur Abscheidung der Partikel beiträgt. Somit kann eine Art Sandwichpaneel bereitgestellt werden, das nur geringe Herstellungskosten aufweist. Die beiden Elemente, Rahmenelement und Filterelement, können beliebig zugeschnitten werden und anschließend miteinander befestigt werden. Die Elemente können beispielsweise kraft- oder stoffschlüssig aneinander bzw. miteinander verbunden werden. Insbesondere können Halteelemente, wie Klammern, eingesetzt werden. Des Weiteren können die Elemente miteinander verklebt werden. Insbesondere kann auf eine aufwändige Faltung oder Querwand verzichtet werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann die zumindest eine Querwand zumindest zwei offene Teilbereiche aufweisen, sodass der Luftstrom von der Eintrittsseite in Richtung der Austrittsseite zum einen durch das Filterelement und zum andern durch einen offenen Teilbereich der Öffnung strömen kann. Die offenen Teilbereiche können als Aussparungen in dem Filterelement ausgebildet sein. Ebenso kann zumindest ein offener Teilbereich neben dem Filterelement ausgebildet sein, wobei das Filterelement in der Geometrie so angepasst werden kann, dass der offene Teilbereich einen Restbereich in einer Querschnittsebene des Filtermoduls ausbilden kann, den das Filterelement nicht überspannt.

In einer vorteilhaften Ausführungsform können die offenen Teilbereiche gespiegelt zueinander in dem Filterelement ausgebildet sein. Insbesondere sind zwei offene Teilbereiche bezüglich einer Mittelachse der Querwand gespiegelt ausgebildet. Die offenen Teilbereiche sind insbesondere auf einer ersten Hälfte der Querwand angeordnet, sodass eine in eine zweite Hälfte der Querwand keine offenen Teilbereiche aufweist. Dadurch können beispielsweise hintereinander baugleiche Querwände angeordnet werden, wobei durch eine Anordnung um jeweils 90°, 180° oder 270° zueinander verdreht ein Filtereinsatz ausgebildet werden kann, der einen hohen Wirkungsgrad mit einem hohen Abscheidungsgrad und sehr guten Standzeiten aufweist.

Gemäß einer vorteilhaften Ausführungsform kann der zumindest eine offene Teilbereich die Form eines Dreiecks, Rechtecks oder eine Freiform aufweisen. So können beispielsweise offene Teilbereiche in, insbesondere gegenüberliegenden, Eckbereichen der Querwand ausgebildet werden.

Ist der offene Teilbereich neben dem Filterelement ausgebildet, so kann beispielsweise das Filterelement die Form eines Teilkreises aufweisen, und der offene Teilbereich eine Form, welche außerhalb des Teilkreisform bis zu einer Rechteckform verbleibt.

Der offene Teilbereich kann teilweise von dem Rahmenelement und teilweise von dem Filterelement begrenzt sein. Der offene Teilbereich kann an das Rahmenelement angrenzen und/oder in einem Eckbereich der Querwand angeordnet sein.

Das Filterelement kann ebenso einen Rahmenabschnitt aufweisen, wobei dieser entlang des Rahmenelements verlaufen kann. Der Rahmenabschnitt des Filterelements kann als Befestigungsfläche des Filterelements dienen, sodass das Filterelement ringsum an dem Rahmenelement befestigt werden kann. In einer derartigen Ausführungsform ist der zumindest eine offene Teilbereich als Aussparung oder Öffnung in dem Filterelement ausgebildet.

Gemäß einer weiteren Ausführungsform kann die zumindest eine Querwand zumindest zwei Öffnungen aufweisen, wobei zumindest eine Öffnung teilweise mit einem Filterelement bedeckt ist, sodass der Luftstrom von der Eintrittsseite in Richtung der Austrittsseite durch die Öffnungen zum einen durch das Filterelement und zum andern durch einen offenen Teilbereich der Öffnung strömen kann. Die weitere Öffnung kann komplett mit dem Filterelement bedeckt sein, sodass der Luftstrom das Filterelement durchströmen muss. Dabei kann das Filterelement der Öffnungen einteilig ausgebildet sein, sodass das Filterelement eine Öffnung komplett abdeckt und in einer weiteren Öffnung nur teilweise überdeckend angeordnet ist. Die Querwand kann daher ein Rahmenelement mit einem Steg aufweisen. Der verbleibende Steg zwischen den beiden Öffnungen ist insbesondere mit einer geringen Breite im Verhältnis zu der Breite der Öffnung ausgeformt, insbesondere in einem Verhältnis von 1:10, oder größer als 1:10, bevorzugt 1:40 bis 1:50, insbesondere größer als 1:30, oder größer als 1:40.

Der Steg zwischen den Öffnungen kann daher zwar ebenso minimal zur Aufnahme der Partikel dienen, bevorzugt dient der Steg jedoch zur Stabilisierung des Filterelements, wenn dieses eine spezielle Geometrie, wie insbesondere eine Teilkreisform oder Kreisform aufweist. Eine Ausführungsform ohne einen derartigen Steg ist jedoch zu bevorzugen. Der Steg bildet daher insbesondere keine Prallwand aus, sodass der Luftstrom durch den Steg im Wesentlichen nicht beeinflusst wird, d. h. insbesondere unbeeinflusst durch den Steg durch das Filterelement strömen kann. Der Steg und das Rahmenelement können einteilig aus einem Papiermaterial ausgebildet sein, sodass die Öffnungen einfach herausgestanzt oder herausgeschnitten werden können.

Gemäß einer weiteren Ausführungsform kann die zumindest eine Querwand mehr als zwei Öffnungen aufweisen, wobei zumindest eine Öffnung komplett mit dem Filterelement überdeckt ist und zumindest eine Öffnung teilweise mit dem Filtermaterial bedeckt ist, sodass in zumindest einer Öffnung ein offener Teilbereich verbleibt.

Gemäß einer vorteilhaften Ausführungsform kann eine Mehrzahl an Querwänden parallel zueinander in dem Aufnahmeelement angeordnet sein, wobei bei hintereinander angeordneten Querwänden zumindest ein offener Teilbereich einer Querwand versetzt zu einem offenen Teilbereich einer benachbarten Querwand angeordnet ist. Beispielsweise kann der offene Teilbereich der ersten Querwand in einem linken Teilbereich, insbesondere in einer ersten Hälfte, der Querwand, und der offene Teilbereich der zweiten Querwand an einem rechten Teilbereich, insbesondere in einer zweiten Hälfte, der Querwand ausgebildet sein. In einer dritten Querwand kann der offene Teilbereich in einem oberen Teilbereich der Querwand ausgebildet sein, der insbesondere den linken und rechten Teilbereich überlappen kann. In einer vierten Querwand kann der offene Teilbereich in einem unteren Teilbereich der Querwand ausgebildet sein, der insbesondere den linken und rechten Teilbereich überlappen kann. Eine fünfte Querwand kann der ersten Querwand entsprechen, wobei sich die Anordnung beliebig oft wiederholen kann.

Beispielsweise können baugleiche Querwände um 90° verdreht zueinander hintereinander angeordnet werden, um die offenen Teilbereiche innerhalb des Filtermoduls ringsum zu verteilen.

Mit anderen Worten sind bevorzugt mehrere Querwände derart hintereinander angeordnet, dass der offene Teilbereich an unterschiedlichen Positionen an der Querwand ausgebildet wird. Die Positionen können nebeneinander angeordnet sein und/oder sich überlappen. So kann die Luftströmung an unterschiedlichen Positionen unterschiedlich abgebremst werden. Insbesondere kann ein wenig gereinigter Teilbereich des Luftstroms eine weiter in Richtung der Austrittsseite angeordnete Querwand erreichen, sodass der Wirkungsgrad des Filtermoduls optimiert werden kann. Alle Querwände können daher in großem Maße zur Reinigung des Luftstromes beitragen.

Gemäß einer vorteilhaften Ausführungsform kann der Filtereinsatz zumindest drei, insbesondere drei bis zwölf, Querwände aufweisen. Die Querwände können beispielsweise alle dieselben offenen Teilbereiche aufweisen, die jedoch versetzt zueinander angeordnet sind. Ebenso können die offenen Teilbereiche in der Größe abnehmen, sodass ein gewünschter Reinigungsgrad bzw. Wirkungsgrad des Filtermoduls ausgebildet werden kann. Eine derartige Anordnung kann als Progressivaufbau bezeichnet werden

In einer Ausführung können die Querwände zumindest teilweise mit unterschiedlichen Abständen zueinander angerordnet sein. Die Querwände, die sich näher an der Eintrittsseite befinden sind bevorzugt mit einem größeren Abstand zueinander angeordnet als die Querwände, die sich näher an der Austrittsseite befinden. Eine umgekehrte Anordnung ist ebenso denkbar. Das Filtermodul kann dabei an die Anzahl der auftretenden Partikel angepasst werden, wobei Verstopfungen vermieden werden können.

In einer weiteren Ausführungsform können die Querwände alle gleichbeabstandet zueinander angeordnet sein. Die unterschiedlichen Filterstärken können durch die Größe und Geometrie des offenen Teilbereichs und des Filterelements ausgebildet werden.

Gemäß einer vorteilhaften Ausführungsform kann der jeweilige zumindest eine offene Teilbereich benachbarter Querwände an unterschiedlichen Positionen an der Querwand angeordnet sein. Die unterschiedlichen Positionen können sich überlappen, wenn die Querwände übereinander gestapelt werden. Weiterhin können die unterschiedlichen Positionen nebeneinander liegen, wenn die Querwände übereinander gestapelt werden.

Gemäß einer vorteilhaften Ausführungsform können die offenen Teilbereiche hintereinander angeordneter Querwände von der Eintrittsseite hin zur Austrittsseite kleiner werden. So kann der Filtergrad von der Eintrittsseite hin zur Austrittsseite allein durch Öffnungen in dem Filterelement, und damit insbesondere alleine durch die Geometrie des Filterelements angepasst werden, ohne dass eine Querwand aus einem luftundurchlässigen Material in der Geometrie von Öffnungen oder dergleichen angepasst werden muss. Insbesondere sind die offenen Teilbereiche von hintereinander angeordneten Querwänden um 180° verdreht zueinander ausgerichtet, sodass ein in der Filterleistung, insbesondere im Abscheidverhalten, der Standzeit und Energiebedarf, optimierter Filter erzielt werden kann.

Gemäß einer Ausführungsform kann die zumindest eine Querwand quer zu einer Verbindungsebene zwischen der Eintrittsseite und der Austrittsseite ausgerichtet sein. Damit kann die Querwand quer zu einem Luftstrom ausgerichtet werden. Bevorzugt ist die Querwand orthogonal zu dem Luftstrom ausgerichtet.

Gemäß einer vorteilhaften Ausführungsform können die Querwände parallel zueinander angeordnet sein. Damit können alle Querwände quer zu dem Luftstrom ausgerichtet sein, sodass durch die Querwände der Luftstrom nicht wesentlich in der Strömungsrichtung umgelenkt wird.

Gemäß einer bevorzugten Ausführungsform können die Querwände an zumindest einer Seitenkante über eine Längsverbindung miteinander verbunden sein, sodass ein zusammenhängender Filtereinsatz ausgebildet wird. Dadurch kann ein Baukastensystem ausgebildet werden, wobei der Filtereinsatz einteilig in das Aufnahmeelement eingeschoben werden kann. Die Längsverbindung kann schwenkbar mit den Querwänden befestigt sein, sodass der Filtereinsatz zusammengeschoben werden kann, sodass die Querwände parallel angeordnet sind und sich für den Transport berühren. Es können beispielsweise zwei Längsverbindungen an zwei gegenüberliegenden Seiten angeordnet werden, in welche die Querwände eingesteckt werden. Dabei können insbesondere die Rahmenelemente zur Befestigung mit der Längsverbindung dienen.

Gemäß einer Weiterbildung können die Querwände über eine komplette Länge zwischen der Eintrittsseite und der Austrittsseite und/oder die zumindest eine Längswand über eine komplette Breite des Aufnahmeelements verlaufen, sodass lediglich ein Filtereinsatz einen Innenraum des Aufnahmeelements überspannt.

Gemäß einer Ausführungsform kann die Eintrittsseite des Aufnahmeelements zumindest eine Öffnung aufweisen, wobei das Filterelement mit dem zumindest einen offenen Teilbereich zumindest einer der Eintrittsseite nächstliegenden Querwand die Öffnung überspannt. Dadurch kann der zu reinigende Luftstrom komplett auf das Filterelement auftreffen, ohne Kontakt mit einem nicht luftdurchlässigen Element, wie einer Querwand mit mehreren kleineren Öffnungen. Durch eine derartige offene Luftführung kann die Standzeit und das Abscheidverhalten des Filtermoduls um mindestens 100 % im Vergleich zu bekannten Filtermodulen mit mehreren kleineren Öffnungen in der Querwand gesteigert werden.

Bei einer vorteilhaften Ausführungsform können das Aufnahmeelement und/oder der Filtereinsatz ein rezyklierbaren Material enthalten und/oder das Filtermodul als Papierfiltermodul ausgebildet sein. Bevorzugt besteht das Aufnahmeelement aus Karton. Ein derartiges Filtermodul kann auch mit anhaftenden Partikeln einfach entsorgt, insbesondere verbrannt werden. Zudem sind die Herstellungskosten minimal.

Bei einer vorteilhaften Ausführungsform kann das Filterelement aus einem Filament, einem Vlies und/oder einer Naturfaser ausgebildet sein. Das Filterelement kann ein Gewebe, Vlies oder dergleichen enthalten, das ebenso rezyklierbar ist. Das Filterelement kann eine gewebte oder feinstrukturierte Struktur aufweisen, die insbesondere dreidimensional ausgebildet ist die genannten Materialien enthalten kann.

Gemäß einer vorteilhaften Ausführungsform kann zumindest ein Sensor zum Messen der Geschwindigkeit des gereinigten Luftstroms und/oder zum Messen eines Widerstandswertes an der Austrittsöffnung angeordnet sein. Vorteilhafterweise kann dadurch festgestellt werden, wann ein Filtermodul ausgetauscht werden muss. Ist die Geschwindigkeit des gereinigten Luftstroms beispielsweise unterhalb einem Schwellenwert, kann davon ausgegangen werden, dass das Filtermodul derart verunreinigt ist, dass kaum mehr Luft hindurchströmen kann.

Gemäß einer Weiterbildung kann an der Austrittsseite innerhalb des Aufnahmeelements eine Kammer angeordnet sein, die zur Aufnahme eines Filterelements dient. Auf diese Weise ist eine Stufe zur Feinstfilterung ausbildbar, die kleinste Partikel aus dem Luftstrom herausfiltert.

Gemäß einer vorteilhaften Ausführungsform kann das Aufnahmeelement wiederverschließbar bzw. wieder öffenbar sein, wobei an einer Seitenfläche des Aufnahmeelements zumindest ein Verschlusselement ausgeformt ist. Bevorzugt kann das Verschlusselement komplett innerhalb der Seitenwand des Aufnahmeelements versenkt werden, sodass dieses ein Anordnen von mehreren Filtermodulen aufeinander bzw. nebeneinander, zur Ausbildung einer zusammenhängenden Fläche, nicht behindert.

Gemäß einer weiteren Idee kann ein Verfahren zum Zusammenbau eines Filtermoduls bereitgestellt werden. Dabei kann vor dem Aufstellen durch vollflächiges Kontaktieren der zumindest einen Längsverbindung mit den Querwänden ein im Wesentlichen zweidimensionale Struktur ohne Hohlräume vorliegen, die durch das Aufstellen zu einer dreidimensionalen Struktur mit zueinander beabstandeten Querwänden umgeformt wird, ohne dass die Querwände oder die zumindest eine Längsverbindung geknickt wird.

Vorteilhaft kann ebenso das Aufnahmeelement als im Wesentlichen zweidimensionale Struktur vorliegen, und vergleichbar zu einem Karton aufgebaut werden. Beide Elemente, d. h. das Aufnahmeelement sowie der Filtereinsatz, können dadurch platzsparend transportiert werden. Der Zusammenbau des Filtermoduls ist zudem zeitsparend und ohne Vorkenntnisse möglich.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: unterschiedliche Ausführungsformen von Querwänden eines Filtereinsatzes;
- Fig. 2: unterschiedliche Ausführungsformen von Querwänden eines Filtereinsatzes;
- Fig. 3: unterschiedliche Ausführungsformen von Querwänden eines Filtereinsatzes;
- Fig. 4: unterschiedliche Ausführungsformen von Querwänden eines Filtereinsatzes;
- Fig. 5: eine Ausführungsform eines Filtereinsatzes;
- Fig. 6: eine Ausführungsform eines Filtermoduls in einer schematischen Darstellung;
- Fig. 7: eine isometrische Darstellung eines Filtereinsatzes;
- Fig. 8: eine Seiteneiansicht des Filteransatzes aus Fig. 7 in einem zusammengelegten Zustand;
- Fig. 9: eine Draufsicht auf Ausführungsformen des Filtermoduls
- Fig. 10: eine Draufsicht auf Ausführungsformen des Filtermoduls;
- Fig. 11: weitere Ausführungsformen von Querwänden eines Filtereinsatzes;
- Fig. 12: eine Ausführungsform eines Filtereinsatzes;
- Fig. 13: weitere Ausführungsformen von Querwänden eines Filtereinsatzes;
- Fig. 14: weitere Ausführungsformen von Querwänden eines Filtereinsatzes;
- Fig. 15: weitere Ausführungsformen von Querwänden eines Filtereinsatzes;
- Fig. 16: eine Ausführungsform eines Filtermoduls in einer isometrischen Darstellung mit Detailansicht eines Verschlusselements;
- Fig. 17: weitere Ausführungsformen von Querwänden eines Filtereinsatzes.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

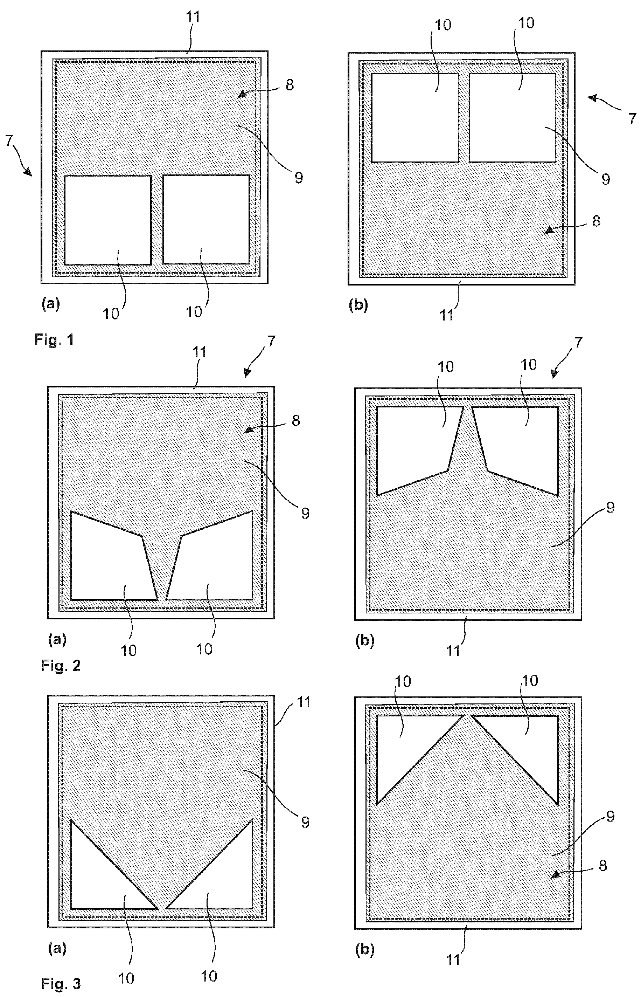

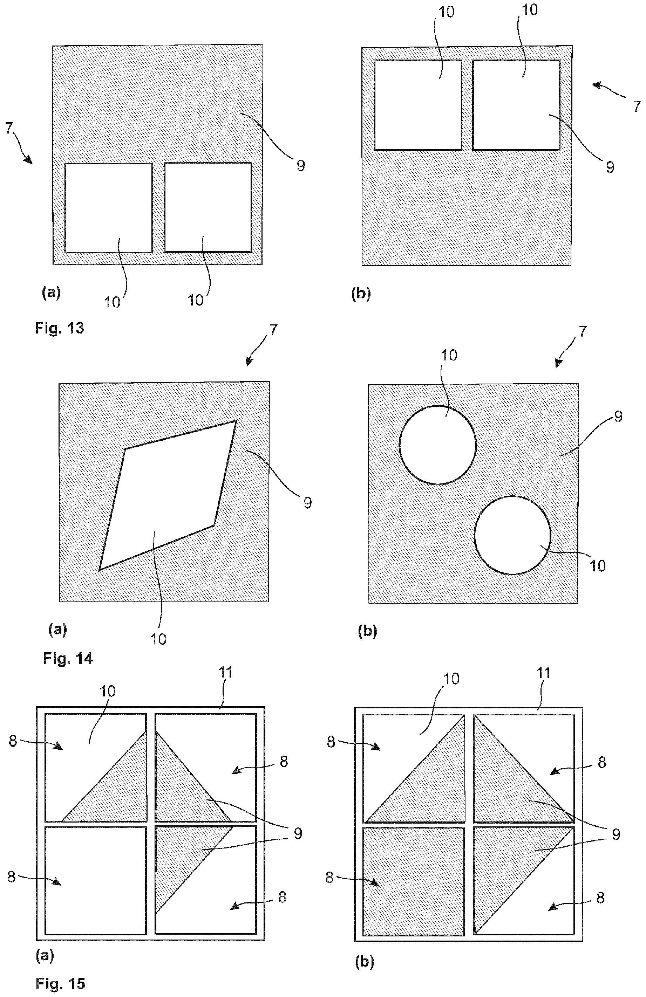

Die Figuren 1 bis 4 zeigen unterschiedliche Ausführungsformen von Querwänden 7 eines Filtereinsatzes 6. Die Querwände 7 weisen jeweils eine Öffnung 8 auf in einem Rahmenelement 11 auf, wobei die Öffnung 8 nahezu die komplette Fläche der Querwand 7 ausbildet. In dem Filterelement 9 sind jeweils zwei offene Teilbereiche 10 ausgebildet, die in dieser Ausführungsform bezüglich einer horizontalen oder einer vertikalen Achse symmetrisch angeordnet. Es ist ebenso denkbar, die Öffnungen unsymmetrisch auszuformen. Des Weiteren kann in jeder Querwand 7 nur ein offener Teilbereich 10 ausgebildet sein, wie beispielhaft in Fig. 13 oder 14 gezeigt.

Die offenen Teilbereiche 10 sind beispielhaft als quadratische, dreieckige oder viereckige Öffnungen in dem Filterelement 9 dargestellt. Andere Geometrien, beispielweise wie in Fig. 13 oder Fig. 14, sind ebenso denkbar.

Die Ausführungsformen zeigen ein Filterelement 9, das an einem Rahmenelement 11 befestigt ist. Dazu kann da Filterelement 9 mit dem Rahmenelement beispielsweise verklebt werden, insbesondere punktuell oder kontinuierlich. Des Weiteren können Fixierungsmittel, wie insbesondere Klammern, eingesetzt werden. Das Filterelement 99 kann dazu, insbesondere im Bereich der offenen Teilbereiche 10, einen Rahmenabschnitt aufweisen, der mit dem Rahmenelement 11 kontaktiert werden kann. Der Rahmenabschnitt kann entlang des Rahmenelements 11 verlaufen. Der Rahmenabschnitt des Filterelements 9 kann als Befestigungsfläche des Filterelements dienen, sodass das Filterelement ringsum an dem Rahmenelement befestigt werden kann. Eine Ausführung ohne das Rahmenelement 11 ist ebenso denkbar, wie in Fig. 13 und 14 beispielhaft gezeigt.

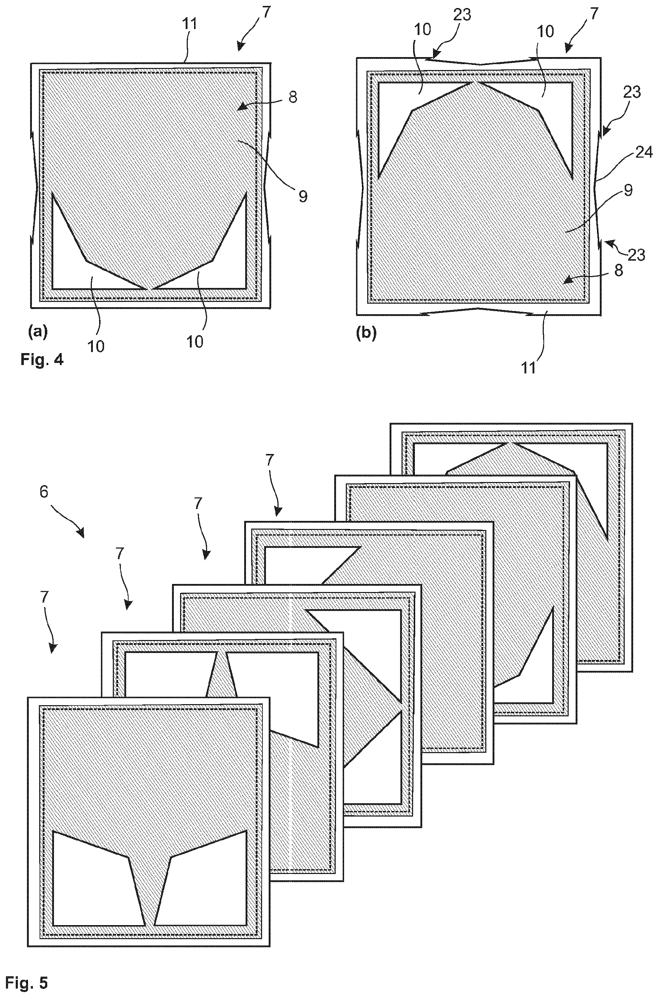

Die Ausführung nach Fig. 1 zeigt beispielsweise eine Querwand 7 mit großen offenen Teilbereichen 10, wobei die Größe der Teilbereiche in den Fig. 2 bis 4 an Größe abnimmt. So können Querwände mit einer groben Filterung, beispielsweise Fig. 2, einer mittleren Filterung, beispielsweise Fig. 3, und einer feinen Filterung, beispielsweise Fig. 4, ausgebildet werden.

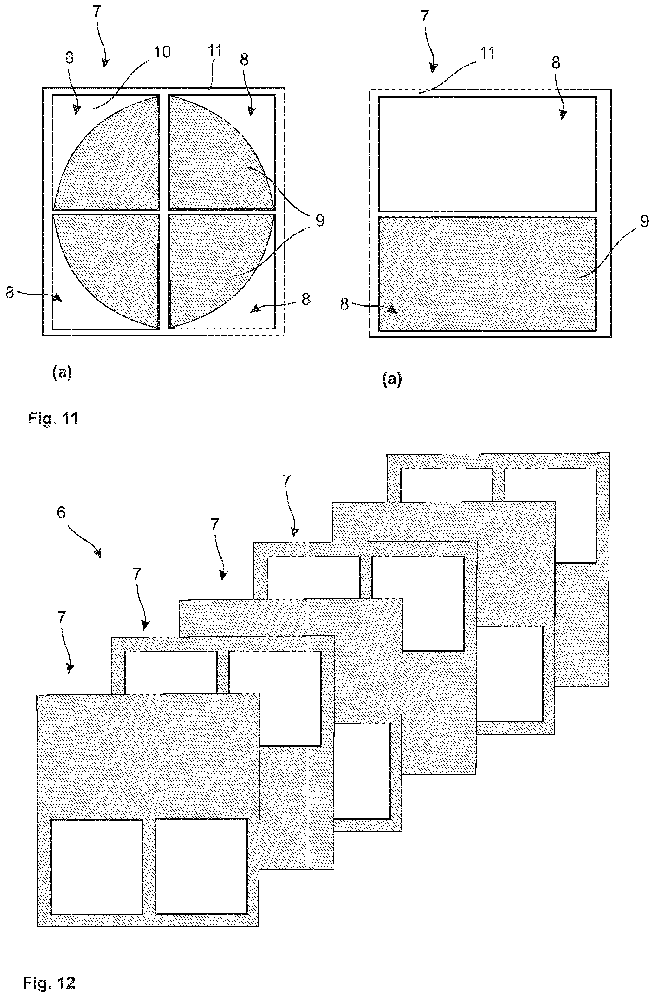

Die Querwände der Fig. 1 bis 4 weisen ein Filterelement 9 auf in welchem zwei offene Teilbereich 10 ausgebildet sind. Ebenso kann der offene Teilbereich 10 neben dem Filterelement 9 ausgebildet sein, wie in Fig. 11, 15 oder 17 gezeigt.

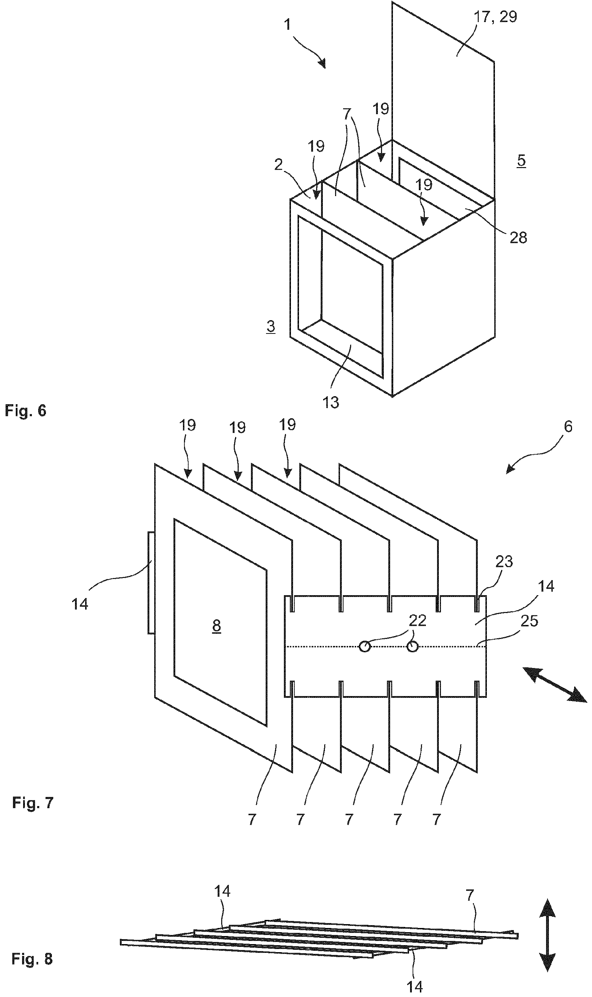

Wie in Fig. 4 dargestellt können an den seitlichen Randabschnitten der Querwand 7 Aufnahmen 23 sowie Rücksprünge 24, insbesondere an dem Rahmenelement 11 oder auch an dem Filterelement 9, angeordnet sein. Die Querwände 7 können demnach über Längsverbindungen 14 miteinander verbunden sein, wie beispielhaft in Fig. 7 gezeigt. Es können daher Längsverbindungen 14 an gegenüberliegenden Seitenbereichen der Querwände 7 angebracht werden. Dabei können beispielsweise vier Längsverbindungen 14 angeordnet werden, wobei die Querwände beispielsweise Aufnahmen 23 sowie Rücksprünge 24 wie in Fig. 4 (b) aufweisen können.

In Fig. 5 ist eine Anordnung der Querwände hintereinander gezeigt, sodass ein Filterelement ausgebildet werden kann. Die Filtereigenschaften können von grob zu fein hintereinander angeordnet werden, wie beispielhaft dargestellt. Ebenso kann zumindest eine Ausführung nach Fig. 1 noch vor die links dargestellte Querwand 7 angeordnet werden. Bei Betrieb des Filtermoduls mit einem derartigen Filtereinsatz strömt zunächst die Luft durch alle Querwände 7 hindurch, da diese aus einem, insbesondere zumindest teilweise, luftdurchlässigen Filtermaterial ausgebildet sind. Die gesamte Fläche der Querwand kann daher durchströmt werden, wobei das Filtermodul keine Prallwände aufweist. Daher kann auch der gesamte Querschnitt der Querwand zur Abscheidung von Partikeln genutzt werden. Durch Abscheidung der Partikel vergrößert sich die Oberfläche des Filterelements und es kommt irgendwann zur Sättigung des Filtermaterials, sodass vorteilhafterweise erst im gesättigten Zustand eine Prallwand ausgebildet wird. Mit anderen Worten kann die Prallwand quasi aus abgeschiedenen Partikeln ausgebildet werden. Durch den offenen Teilbereich 10 wird vorteilhaft auch im gesättigten Zustand der Querwand eine Luftführung durch die Querwand hindurch ermöglicht, sodass die dahinter angeordneten Querwände 7 ebenso kontinuierlich angeströmt werden, und zur Abscheidung beitragen können. So kann der komplette Filtereinsatz nach und nach gesättigt werden. Ein Austausch der Filtermodule kann daher weit später erfolgen, als mit bekannten Filtermodulen, die von Vornerein Prallwände aufweisen. Der erfindungsgemäße Filter kann daher eine weitaus größere Menge an Partikeln aufnehmen.

In der dargestellten Ausführung in Fig. 5 sind die Querwände 90° gedreht zueinander angeordnet, sodass die offenen Teilbereiche 10 benachbarter Querwände 7 entweder nebeneinander angeordnet sind, oder sich teilweise überlappen.

Die in Fig. 5 gezeigten Querwände können ebenso Aufnahmen 23 sowie Rücksprünge 24 wie in Fig. 4 (a) oder 4 (b) gezeigt aufweisen.

Die Anordnung der Querwände 7 aus Fig. 1 bis Fig. 4 kann ebenso wie in Fig. 12 gezeigt sein, sodass die Querwände 180° gedreht zueinander angeordnet sind.

Fig. 6 zeigt ein Filtermodul 1 mit einem Aufnahmeelement 2 und einem Filtereinsatz 6 mit geöffnetem Deckel 29. An der Eintrittsseite 3 ist eine Öffnung 13 angeordnet, die beispielsweise der Öffnung 8 (nicht dargestellt) der Querwand 7 entsprechen kann, die am nächsten an der Eintrittsseite 3 angeordnet ist. Gegenüberliegend zur Eintrittsseite 3 ist eine Austrittsseite 5 am Aufnahmeelement 2 angeordnet, die eine Öffnung 28 aufweist. Die Öffnung 28 ist bevorzugt nahezu über die komplette Seitenfläche des Aufnahmeelements 2 ausgebildet, um eine Abführung der gereinigten Luft 4b schnellstmöglich zu gewährleisten.

Fig. 7 zeigt eine isometrische Darstellung eines Filtereinsatzes 6. Zur Ausbildung einer dreidimensionalen Struktur sind die Querwände 7 im Wesentlichen rechtwinklig zueinander angeordnet. An einem seitlichen Ende der Querwände 7 können die Querwände 7 über Längsverbindungen 14, auch als Zentrierspanner bezeichnet, miteinander verbunden sein. Dafür kann jede der Querwände 7 Aufnahmen 23 sowie Rücksprünge 24, insbesondere an dem Rahmenelement 11 oder auch an dem Filterelement 9, aufweisen. Durch die Längsverbindungen 14 kann die dreidimensionale Struktur hergestellt werden. Die Längsverbindung 14 kann beispielsweise Ausnehmungen 22 aufweisen, in welche eine Bedienperson mit den Fingern hineingreifen kann. Dadurch können die Längsverbindungen 14 einfacher gesetzt werden. Vorteilhafterweise weist die Längsverbindung 14 ebenso einen Falz 25 auf, der sich über die Länge der Längsverbindung 14 erstreckt. Greift nun eine Bedienperson in die Ausnehmungen 22 mit den Fingern hinein, faltet sich die Längsverbindung 14 entlang des Falzes 25, sodass sich diese leichter platzieren lässt. Bevorzugt ist die Längsverbindung 14 etwas länger als der Abstand zwischen den beiden Aufnahmen 23 ausgebildet, sodass diese sicher dazwischen verspannt werden kann.

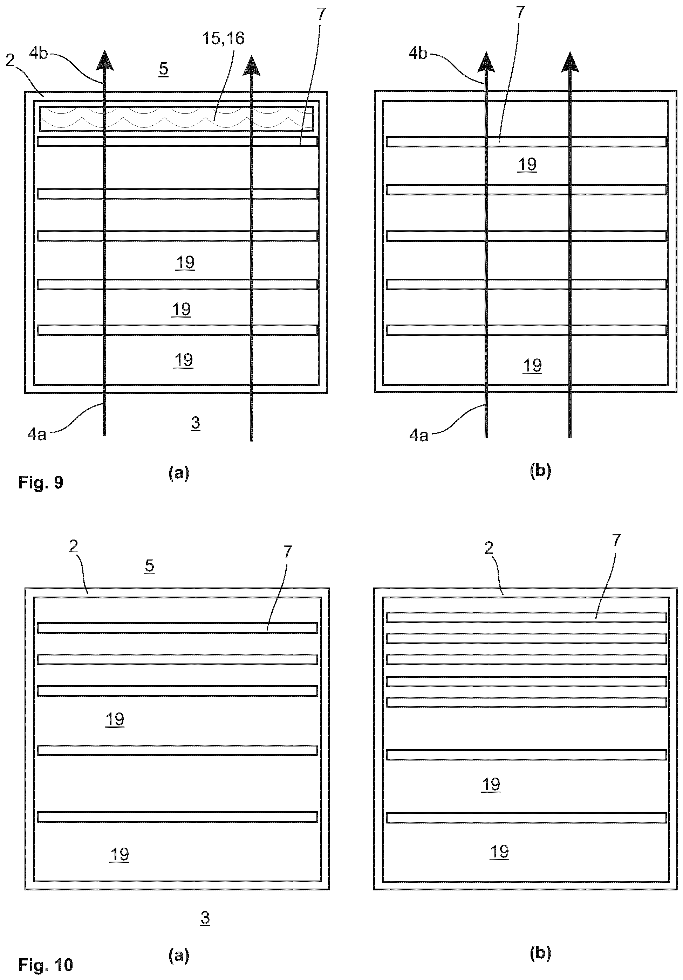

Fig. 8 zeigt eine Seiteneiansicht des Filteransatzes 6 aus Fig. 10 in einem zusammengelegten Zustand. Es ist erkennbar, dass die Querwände 7 gegenüber den Längsverbindungen 14 verkippt werden, um aus einer zweidimensionalen Struktur gemäß Fig. 8 eine dreidimensionale Struktur gemäß Fig. 7 zu erhalten. Beim Aufstellen des Filtereinsatzes 6 zu einer dreidimensionalen Struktur mit rechteckigen oder quadratischen Hohlräumen 19 werden die Querwände 7 daher nicht geknickt. Insgesamt weist der Filtereinsatz 6 daher eine hohe Stabilität auf. Des Weiteren kann ein einfacher Transport des zusammengeklappten Filtereinsatzes erfolgen. Dadurch kann eine Volumenreduzierung je nach Ausführung von > 30%, insbesondere zwischen 30 % - 80%, erreicht werden je nach Ausführung und Ausstattung der Querwände.

Fig. 9 zeigt zwei Draufsichten auf zwei weitere Ausführungsformen. Die Richtung der Luftströmung 4 ist durch die Pfeile dargestellt. Jede der Luftströmungen 4 ist dabei eine laminare Strömung, wobei keine mäanderförmige Umleitung zu benachbarten Luftströmungen, d. h. parallel oder quer zu den Querwänden 7, und demnach in der Darstellung keine Ablenkung der Luftströmung nach links bzw. nach rechts, erfolgt. Es kann somit eine offene Luftführung umgesetzt werden, wobei der Luftstrom komplett durch luftdurchlässiges Material innerhalb des Filtereinsatzes 6 geleitet werden kann. In Fig. 6 (a) weist das Aufnahmeelement 2 an der Austrittsseite 5 eine Kammer 15 auf, in welcher ein Filterelement 16, insbesondere als Nachfilter bezeichnet, angeordnet ist. Dadurch kann die zu reinigende Luft 4a in einem letzten Schritt feinstgereinigt werden.

Fig. 10 (a) und 10 (b) zeigen jeweils eine Draufsicht auf eine weitere Ausführungsform. In dieser Ausführungsform sind die Querwände 7 in unterschiedlichen Abständen zueinander angeordnet. Bevorzugt sind die Querwände 7 im Bereich der Eintrittsseite 3 mit einem größeren Abstand zueinander angeordnet, da in diesem Bereich die meisten Partikel aus der zu reinigenden Luft an dem Filtereinsatz 6 anhaften. Im Bereich der Austrittsseite 5 sind die Querwände 7 näher beieinander angeordnet. Dadurch kann eine Feinreinigung der Luftströmung erfolgen. Bei einer derartigen Anordnung kann eine Verteilung der Partikel über den kompletten Filtereinsatz 6 speziell angepasst werden, sodass das Filtermodul 1 über einen besonders langen Zeitraum effektiv verwendet werden kann.

Jede Querwand der Fig. 9 und 10 kann beispielsweise wie in Fig. 1 bis 4 11 bis 15 oder 17 ausgebildet sein.

Fig. 11 zeigt zwei weitere Ausführungsformen, wie offene Teilbereiche 10 in den Öffnungen 8 ausgebildet sein können. Zwischen den Öffnungen 8 ist ein Steg vorgesehen, der mit dem Rahmenelement 11, insbesondere einteilig, verbunden sein kann. Der Steg ist vergleichsweise dünn ausgebildet, sodass dieser lediglich zur Stabilisierung des Filterelements 9 dient, jedoch nicht zur Abscheidung von Partikeln ausgelegt ist. Demnach wird die offene Luftführung durch den Steg nicht beeinträchtigt. Der Steg kann dabei einen Bruchteil der Oberfläche der Querwand 7 ausbilden, insbesondere in einem Verhältnis von 1:20 bis 1:50, bevorzugt 1:20 bis 1:25 oder 1:30 bis 1:40. In Fig. 11 (a) sind in allen Öffnungen offene Teilbereiche 10 ausgebildet. Das Filterelement 9 ist hier kreisförmig ausgebildet, sodass jede Öffnungen 8 mit einem teilkreisförmigen Filterelement 9 teilweise überspannt wird. An den Ecken wird daher eine offene Luftführung durch die offenen Teilbereiche 10 ermöglicht. In Fig. 11 (b) ist die obere Öffnung 8 ohne Filterelement 9 ausgebildet, während die untere Öffnung mit einem Filterelement 9 überspannt sind.

Fig. 12 zeigt nebeneinander angeordnete Querwände 7 mit offenen Teilbereichen 10 in einer weiteren Ausführungsform nach Fig. 13. Die offenen Teilbereich 10 jeder Querwand 7 sind in unterschiedlichen Positionen an der Querwand 7 angeordnet, wobei sich in dieser Ausführungsform die offenen Teilbereiche 10 der Querwände 7 in einem zusammengebauten Zustand des Filtereinsatzes 6 nicht überlappen. Die zu reinigende Luft kann dadurch wie bezüglich Fig. 5 beschreiben gereinigt werden, wobei ein hoher Wirkungsgrad erzielt werden kann.

Es können auch unterschiedliche Varianten kombiniert werden, sodass ein Element aus Fig. 1 hinter oder vor einem Element aus Fig. 2, 3, 4, 11, 13, 14 oder 15 angeordnet werden kann. Ebenso kann dazwischen oder können am Ende eine oder mehrere Querwände 7 angeordnet werden, in welcher kein offener Teilbereich 10 vorgesehen ist, sondern die Querwand 7 komplett mit dem Filterelement 9 überspannt ist. Dabei kann insbesondere ein Progressivaufbau umgesetzt werden.

Beispielsweise können 8 bis 12 Querwände 7 hintereinander angeordnet werden. Eine abweichende Anzahl ist ebenso denkbar. Die Abstände der Querwände 7 können in Richtung der Austrittsseite kleiner werden.

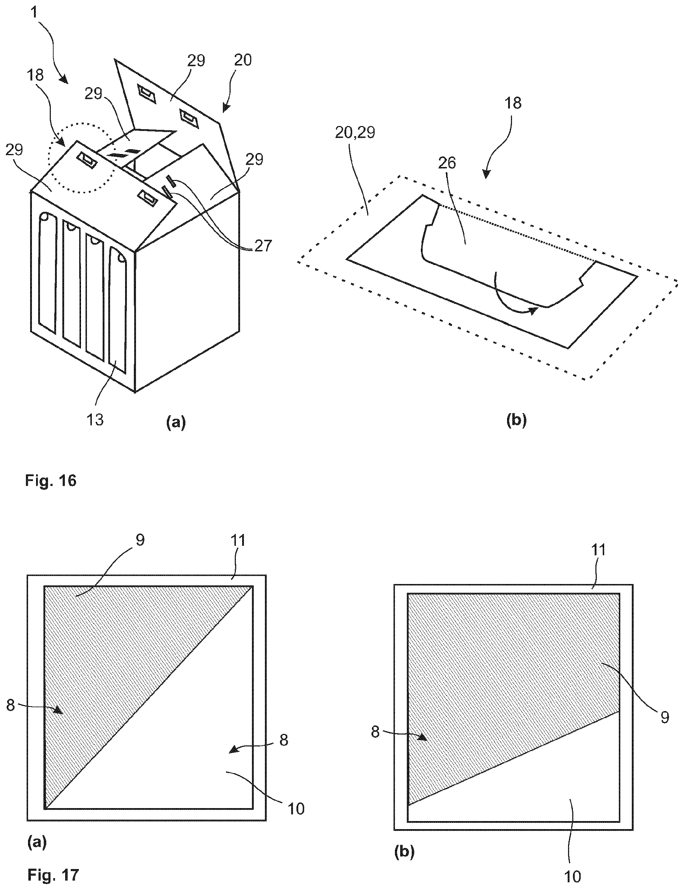

Fig. 16 zeigt eine Ausführungsform eines Filtermoduls 6 in einer isometrischen Darstellung mit Detailansicht eines Verschlusselements 18. Die Verschlusselemente 18 sind an der Oberseite 20 des Aufnahmeelements 2 angeordnet. Die Oberseite 20 weist vier Elemente auf, die gemeinsam einen Deckel 29 ausbilden. An zwei der Elemente sind jeweils zwei Verschlusselemente 18 angeordnet. Zwei weitere Elemente des Deckels 29 weisen jeweils zwei Schlitze 27 auf. Die Schlitze 27 sind versetzt zueinander angeordnet. Folglich sind auch die Verschlusselemente 18 in gleicher Weise versetzt zueinander angeordnet.

In der Detailansicht in Fig. 16 (b) ist erkennbar, dass das Verschlusselement 18 aus einer Lasche 26 besteht, die in einen Schlitz 27 in einem weiteren Element des Deckels 29 eingreifen kann. Die Lasche 26 wird von oben in den Schlitz 27 eingeführt und in Pfeilrichtung umgebogen. Dadurch weist das Aufnahmeelement 2 eine ebene Oberseite 20 auf. Die Oberseite 20 ist vergleichbar zu einem Verpackungskarton ausgestaltet, aufweisende zwei innen liegende Laschen sowie zwei außenliegende Laschen, die gemeinsam einen Deckel 29 ausbilden.

In dieser Ausführungsform weist das Aufnahmeelement 2 an der Seitenfläche, die eine Eintrittsseite 3 ausbildet, vier im Wesentlichen rechteckige Öffnungen 13 auf. Vor Benutzung des Filtermoduls 1 können diese durch abnehmbare Elemente verschlossen sein, um ein Verschmutzen des Filtereinsatzes 6 zu verhindern. Über Eingriffslöcher bzw. Ausnehmungen können diese abnehmbaren Elemente leicht händisch entfernt werden. Dafür ist die Form der Öffnungen 13 bevorzugt durch eine Perforation vorgezeichnet. Ebenso kann an der Austrittsseite 5 die Öffnung 13 wie in Fig. 6 ausgebildet sein und zunächst durch ein abnehmbares Element verschlossen sein.

In Fig. 17 ist eine weitere Ausführungsform einer Querwand 7 gezeigt, wobei das Filterelement 9 eine Dreiecksform oder eine verzerrte Viereckform aufweist. Der offene Teilbereich 10 kann daher benachbart zu dem Filterelement, d. h. neben dem Filterelement 9, angeordnet sein. Dabei ist bevorzugt ein Rahmenelement 11 vorgesehen, sodass der offene Teilbereich 10 teilweise von dem Rahmenelement 11 und teilweise von dem Filterelement 9 begrenzt wird. Gleichzeitig kann das Filterelement 9 an dem Rahmenelement befestigt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. So können beispielsweise die oben beschriebenen offenen Teilbereiche 10 unterschiedliche Ausgestaltungen aufweisen. Dabei kann vor allem auch die Form von der dargestellten Form abweichen. Ebenso kann die Anordnung der offenen Teilbereiche 10 von der dargestellten Weise abweichen.

### Bezugszeichenliste

- 1: Filtermodul
- 2: Aufnahmeelement
- 3: Eintrittsseite
- 4: Luftstrom
- 5: Austrittsseite
- 6: Filtereinsatz
- 7: Querwand
- 8: Öffnung der Querwand
- 9: Filterelement
- 10: offener Teilbereich
- 11: Rahmenelement
- 12: Innenraum
- 13: Öffnung der Eintrittsseite
- 14: Längsverbindung
- 15: Kammer
- 16: Filtermaterial
- 17: Seitenfläche
- 18: Verschlusselement
- 19: Hohlraum
- 20: Oberseite
- 21: Plattenelement
- 22: Ausnehmung
- 23: Aufnahme der Querwand
- 24: Rücksprung
- 25: Falz
- 26: Lasche
- 28: Öffnung der Austrittsseite
- 29: Deckel

## Patentansprüche

1. Filtermodul (1), zur Abscheidung von Partikeln aus verunreinigter Luft, insbesondere zur Abscheidung von Farbpartikeln aus einem Luftstrom,
mit einem Aufnahmeelement (2), das eine Eintrittsseite (3), für den Eintritt eines zu reinigenden Luftstroms (4a), und eine Austrittsseite (5), für den Austritt des gereinigten Luftstroms (4b), aufweist, wobei die Eintrittsseite (3) und die Austrittsseite (5) gegenüberliegend an dem Aufnahmeelement (2) angeordnet sind,
mit zumindest einem Filtereinsatz (6), der in dem Aufnahmeelement (2) aufgenommen ist,
wobei der Filtereinsatz (6) zumindest eine Querwand (7) aufweist, und die Querwand (7) aus einem zumindest teilweise luftdurchlässigen Filterelement (9) ausgebildet ist, wobei in dem Filterelement (9) oder neben dem Filterelement (9) ein offener Teilbereich (10) ausgebildet ist, sodass der Luftstrom (4) von der Eintrittsseite (3) in Richtung der Austrittsseite (5) zum einen durch das Filterelement (9) und zum andern durch den offenen Teilbereich (10) strömen kann,
wobei die zumindest eine Querwand (7) als Sandwichpaneel ausgebildet ist und ein Rahmenelement (11) aufweist, wobei das Filterelement (9) an dem Rahmenelement (11) befestigt ist.

2. Filtermodul nach Anspruch 1,
**dadurch gekennzeichnet,**
**dass** die zumindest eine Querwand (7) zumindest zwei offene Teilbereiche (10) aufweist.

3. Filtermodul nach Anspruch 2,
**dadurch gekennzeichnet,**
**dass** die offenen Teilbereiche (10) gespiegelt zueinander in dem Filterelement (9) ausgebildet sind.

4. Filtermodul (1) nach einem der vorstehenden Ansprüche, **dadurch gekennzeichnet,**
**dass** der zumindest eine offene Teilbereich (10) die Form eines Dreiecks, Rechtecks oder eine Freiform aufweist.

5. Filtermodul nach einem der vorstehenden Ansprüche, **dadurch gekennzeichnet,**
**dass** eine Mehrzahl an Querwänden (7) parallel zueinander in dem Aufnahmeelement (2) angeordnet ist, wobei bei hintereinander angeordneten Querwänden (7) zumindest ein offener Teilbereich (10) einer Querwand (7) versetzt zu einem offenen Teilbereich (10) einer benachbarten Querwand (7) angeordnet ist.

6. Filtermodul nach Anspruch 5,
**dadurch gekennzeichnet,**
**dass** der Filtereinsatz (6) zumindest zwei, insbesondere drei bis zwölf, Querwände (7) aufweist.

7. Filtermodul nach einem der Ansprüche 1 oder 6,
**dadurch gekennzeichnet,**
**dass** der jeweilige zumindest eine offene Teilbereich (10) benachbarter Querwände (7) an unterschiedlichen Positionen an der Querwand (7) angeordnet ist.

8. Filtermodul nach einem der Ansprüche 5 bis 7,
**dadurch gekennzeichnet,**
**dass** die offenen Teilbereiche (10) hintereinander angeordnete Querwände (7) von der Eintrittsseite (3) hin zur Austrittsseite (5) kleiner werden.

9. Filtermodul nach einem der vorstehenden Ansprüche, **dadurch gekennzeichnet,**
**dass** die zumindest eine Querwand (7) quer zu einer Verbindungsebene zwischen der Eintrittsseite (3) und der Austrittsseite (6) ausgerichtet sind.

10. Filtermodul nach einem der Ansprüche 5 bis 9,
**dadurch gekennzeichnet,**
**dass** die Querwände (7) parallel zueinander angeordnet sind.

11. Filtermodul nach einem der Ansprüche 5 bis 10,
**dadurch gekennzeichnet,**
**dass** die Querwände (7) an zumindest einer Seitenkante über eine Längsverbindung (14) miteinander verbunden sind, sodass ein zusammenhängender Filtereinsatz (6) ausgebildet wird.

12. Filtermodul nach einem der vorstehenden Ansprüche, **dadurch gekennzeichnet,**
**dass** die zumindest eine Querwand (7) über eine komplette Breite des Aufnahmeelements (2) verläuft, sodass lediglich ein Filtereinsatz (6) einen Innenraum (12) des Aufnahmeelements (2) überspannt.

13. Filtermodul nach einem der vorstehenden Ansprüche, **dadurch gekennzeichnet,**
**dass** die Eintrittsseite (3) des Aufnahmeelements (2) zumindest eine Öffnung (13) aufweist, wobei das Filterelement (9) mit dem zumindest einen offenen Teilbereich (10) zumindest einer der Eintrittsseite (3) nächstliegenden Querwand (7) die Öffnung (13) überspannt.

14. Filtermodul nach einem der vorstehenden Ansprüche, **dadurch gekennzeichnet,**
**dass** das Aufnahmeelement (2) und/oder der Filtereinsatz (6) ein rezyklierbaren Material enthalten, und/oder das das Filterelement aus einem Filament, einem Vlies und/oder einer Naturfaser ausgebildet ist.

## Claims

1. Filter module (1) for separating particles from contaminated air, in particular for separating paint particles from an airflow,
comprising a receiving element (2) which has an inlet side (3) for admitting an airflow (4a) to be cleaned and an outlet side (5) for discharging the cleaned airflow (4b), the inlet side (3) and the outlet side (5) being arranged opposite one another on the receiving element (2),
comprising at least one filter insert (6) which is incorporated into the receiving element (2),
wherein the filter insert (6) has at least one transverse wall (7), and the transverse wall (7) is formed from a filter element (9) which is at least partially permeable to air, an open sub-region (10) being formed in the filter element (9) or alongside the filter element (9) in such a way that the airflow (4) can flow from the inlet side (3) towards the outlet side (5) both through the filter element (9) and through the open sub-region (10),
wherein the at least one transverse wall (7) is formed as a sandwich panel and has a frame element (11), the filter element (9) being attached to the frame element (11).

2. Filter module according to claim 1,
**characterised**
**in that** the at least one transverse wall (7) has at least two open sub-regions (10).

3. Filter module according to claim 2,
**characterised**
**in that** the open sub-regions (10) are mirrored with respect to one another in the filter element (9).

4. Filter module (1) according to any of the preceding claims, **characterised**
**in that** the at least one open sub-region (10) has the shape of a triangle, rectangle or freeform.

5. Filter module according to any of the preceding claims, **characterised**
**in that** a plurality of transverse walls (7) are arranged mutually parallel in the receiving element (2), and, in the case of transverse walls (7) arranged in succession, at least one open sub-region (10) of a transverse wall (7) is offset from an open sub-region (10) of an adjacent transverse wall (7).

6. Filter module according to claim 5,
**characterised**
**in that** the filter insert (6) has at least two, in particular three to twelve, transverse walls (7).

7. Filter module according to either claim 1 or claim 6, **characterised**
**in that** the at least one open sub-region (10) of adjacent transverse walls (7) is arranged at different positions on the transverse wall (7) in each case.

8. Filter module according to any of claims 5 to 7, **characterised**
**in that** the open sub-regions (10) of transverse walls (7) arranged in succession become smaller from the inlet side (3) towards the outlet side (5).

9. Filter module according to any of the preceding claims, **characterised**
**in that** the at least one transverse wall (7) is orientated transverse to a connecting plane between the inlet side (3) and the outlet side (6).

10. Filter module according to any of claims 5 to 9, **characterised**
**in that** the transverse walls (7) are arranged mutually parallel.

11. Filter module according to any of claims 5 to 10, **characterised**
**in that** the transverse walls (7) are interconnected via a longitudinal connection (14) at at least one side edge, in such a way that a continuous filter insert (6) is formed.

12. Filter module according to any of the preceding claims, **characterised**
**in that** the at least one transverse wall (7) extends over a complete width of the receiving element (2), in such a way that just one filter insert (6) spans an interior (12) of the receiving element (2).

13. Filter module according to any of the preceding claims, **characterised**
**in that** the inlet side (3) of the receiving element (2) has at least one opening (13), the filter element (9) spanning the opening (13) with the at least one open sub-region (10) of at least one transverse wall (7), which is closest to the inlet side (3).

14. Filter module according to any of the preceding claims, **characterised**
**in that** the receiving element (2) and/or the filter insert (6) contain a recyclable material, and/or in that the filter element is made of a filament, a non-woven fabric and/or a natural fibre.

## Revendications

1. Module de filtration (1) destiné à séparer des particules d'un air pollué, en particulier à séparer des particules de peinture d'un flux d'air,
avec un élément de réception (2) qui présente un côté entrée (3) pour l'entrée d'un flux d'air (4a) à purifier et un côté sortie (5) pour la sortie du flux d'air purifié (4b), le côté entrée (3) et le côté sortie (5) étant disposés l'un en face de l'autre sur l'élément de réception (2),
avec au moins un insert filtrant (6) qui est reçu dans l'élément de réception (2),
l'insert filtrant (6) présentant au moins une paroi transversale (7), et la paroi transversale (7) étant formée d'un élément filtrant (9) au moins partiellement perméable à l'air, une zone partielle ouverte (10) étant formée dans l'élément filtrant (9) ou à côté de l'élément filtrant (9), de sorte que le flux d'air (4) peut s'écouler depuis le côté entrée (3) vers le côté sortie (5) d'une part à travers l'élément filtrant (9) et d'autre part à travers la zone partielle ouverte (10),
dans lequel au moins une paroi transversale (7) est réalisée sous la forme d'un panneau sandwich et présentant un élément de cadre (11), l'élément filtrant (9) étant fixé à l'élément de cadre (11).

2. Module de filtration selon la revendication 1,
**caractérisé en ce**
**que** ladite au moins une paroi transversale (7) présente au moins deux zones partielles ouvertes (10).

3. Module de filtration selon la revendication 2,
**caractérisé en ce**
**que** les zones partielles ouvertes (10) sont formées de manière symétrique l'une par rapport à l'autre dans l'élément filtrant (9).

4. Module de filtration (1) selon l'une des revendications précédentes,
**caractérisé en ce**
**que** ladite au moins une zone partielle ouverte (10) présente la forme d'un triangle, d'un rectangle ou une forme libre.

5. Module de filtration selon l'une des revendications précédentes,
**caractérisé en ce**
**qu'**une pluralité de parois transversales (7) sont disposées parallèlement les unes aux autres dans l'élément de réception (2), au moins une zone partielle ouverte (10) d'une paroi transversale (7) étant décalée par rapport à une zone partielle ouverte (10) d'une paroi transversale (7) adjacente lorsque les parois transversales (7) sont disposées les unes derrière les autres.

6. Module de filtration selon la revendication 5,
**caractérisé en ce**
**que** l'insert filtrant (6) présente au moins deux, en particulier trois à douze, parois transversales (7).

7. Module de filtration selon l'une des revendications 1 ou 6,
**caractérisé en ce**
**que** ladite au moins une zone partielle ouverte (10) respective de parois transversales (7) adjacentes est disposée à des positions différentes sur la paroi transversale (7).

8. Module de filtration selon l'une des revendications 5 à 7, **caractérisé en ce**
**que** les zones partielles ouvertes (10) des parois transversales (7) disposées les unes derrière les autres deviennent plus petites du côté entrée (3) vers le côté sortie (5).

9. Module de filtration selon l'une des revendications précédentes,
**caractérisé en ce**
**que** ladite au moins une paroi transversale (7) est orientée transversalement par rapport à un plan de jonction entre le côté entrée (3) et le côté sortie (6).

10. Module de filtration selon l'une des revendications 5 à 9, **caractérisé en ce**
**que** les parois transversales (7) sont disposées parallèlement les unes aux autres.

11. Module de filtration selon l'une des revendications 5 à 10, **caractérisé en ce**
**que** les parois transversales (7) sont reliées entre elles au niveau d'au moins un bord latéral par une liaison longitudinale (14), de manière à former un insert filtrant (6) continu.

12. Module de filtration selon l'une des revendications précédentes,
**caractérisé en ce**
**que** ladite au moins une paroi transversale (7) s'étend sur toute la largeur de l'élément de réception (2), de sorte qu'un seul insert filtrant (6) recouvre un espace intérieur (12) de l'élément de réception (2).

13. Module de filtration selon l'une des revendications précédentes,
**caractérisé en ce**
**que** le côté entrée (3) de l'élément de réception (2) présente au moins une ouverture (13), l'élément filtrant (9) recouvrant l'ouverture (13) avec ladite au moins une zone partielle ouverte (10) d'au moins une paroi transversale (7) la plus proche du côté entrée (3).

14. Module de filtration selon l'une des revendications précédentes,
**caractérisé en ce**
**que** l'élément de réception (2) et/ou l'insert filtrant (6) contiennent un matériau recyclable et/ou **en ce que** l'élément filtrant est constitué d'un filament, d'un non-tissé et/ou d'une fibre naturelle.
